# EUROPEAN PATENT SPECIFICATION

(11) **EP 1 334 818 B1**
(45) Date of publication and mention of the grant of the patent: **17.11.2004**
(21) Application number: 02250861.8
(22) Date of filing: 08.02.2002
(51) Int. Cl.: B29C 51/00, B29C 45/14, B60R 13/02

(54) **Method of manufacturing a decorative panel cover and corresponding panel**
Verfahren zur Herstellung eines dekorativen Armaturbretts und entsprechendes Armaturbrett
Procédé pour produire une planche de bord décorée et planche de bord correspondante

(43) Date of publication of application: 13.08.2003
(73) Proprietor: Visteon Global Technologies, Inc., Dearborn, Michigan 48126-2490 (US)
(72) Inventor: Wright Ian Sutherland, Chelmsford Essex, CM1 2PR (GB); Davies Gordon, Hertford, SG14 3AN (GB); Lawes, Brad, Warwick, CV35 0SB (GB)
(74) Representative: Simons, Alison Diane

(56) References cited:
- US-A- 5 116 079

## Description

This invention relates to a method of manufacturing a decorative panel cover, particularly although not exclusively for use in an automobile.

Interior components in an automobile are often produced as a series having different specifications, where a high specification automobile uses an interior part with a high specification, and a low specification vehicle uses an interior part having a low specification. One example of this is where a stitch line is applied to components of a series with a high specification in order to give a 'hand crafted' appearance to those components. Such a stitch line is usually intended to appear as if it is required for the manufacture of the part, but in fact it is usually merely decorative.

In order to produce a hand stitched appearance, conventionally, a moulded substrate is produced which defines the shape of the required component, for example an instrument panel or console, or a door trim. A cover material, for example poly vinyl chloride (PVC) or thermoplastic polyolefin (TPO) is cut into parts of appropriate shapes according to a pattern in a similar manner to the method used when making a garment. The parts are then sewn together to form the shape required to clad the moulded substrate. The completed cover is then placed over the substrate and bonded in place. A foamed material may be used between the substrate and the cover in order to achieve a soft feel for the component and this foamed material which may act as a bonding agent.

Disadvantages of this conventional process are that the process is very labour intensive, and thus it is impractical to produce parts with such an appearance in large volumes. Furthermore the process involves stretching the skin after the parts have been sewn together, which may create a weakness along the stitch line.

According to the invention there is provided a method of manufacturing a decorative cover for a panel, comprising the steps of moulding a cover material to produce a first moulded cover part; moulding a cover material to produce a second moulded cover part; attaching the first moulded cover part to the second moulded cover part to form a seamed moulded cover with a seam; and topstitching the seamed moulded cover on at least one side of said seam.

In one embodiment of the invention the first moulded cover part and the second moulded cover part are produced by separating a single moulded cover into two parts.

In a second embodiment of the invention the first moulded cover part is produced by separating a first moulded cover into two parts and the second moulded cover part is produced by separating a second moulded cover into two parts.

It is an advantage if the same tools may be used to produce moulded covers either with or without a stitch line. Preferably, in the second embodiment the shape and form of the first moulded cover and the shape and form of the second moulded cover is the same as the shape and form of the resulting seamed moulded cover.

Preferably the attaching step is performed by stitching the first part of the first moulded cover to the second part of the second moulded cover.

It is an advantage if the method further comprises the step of sealing the seam by bonding a reinforcing strip along the inside of the seam.

In preferred embodiments the topstitching step comprises topstitching the seamed moulded cover on each side of said seam.

According to another aspect of the invention there is also provided a decorative panel cover comprising a first moulded cover part; and a second moulded cover part; in which the first moulded cover part is attached to the second moulded cover part along a seam; and at least one side of said seam is top stitched.

Preferably the first moulded part is attached to the second moulded part by stitching, and the seam is reinforced using a reinforced strip.

In the preferred embodiment both sides of the seam are top stitched.

Embodiments of the invention will now be described, by way of example only, with reference to the accompanying drawings, in which
Figure 1 shows an instrument panel moulded substrate to which a decorative cover is to be applied;
Figure 2 illustrates a moulded cover, marked where cuts are to be performed;
Figure 3 illustrates a seamed moulded cover after it has been applied to a moulded substrate to form a decorative instrument panel;
Figure 4 shows the reverse side of a seam formed by attaching two moulded cover parts;
Figure 5 illustrates a two tone seamed moulded cover; and
Figure 6 illustrates a seam which has been sealed.

The first stage in manufacturing a decorative panel according to the invention is to prepare the cover material which will form a surface. In this example, the material is PVC, other materials which may be used include a laminate material or TPO. Many other different materials and combinations of materials can however be used, and the invention is not restricted to any particular material or materials.

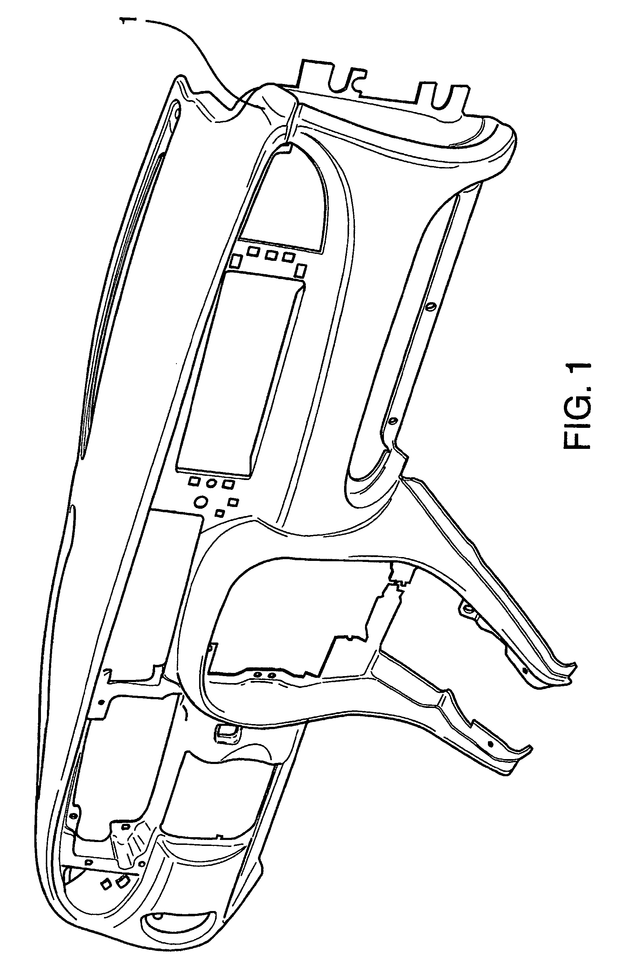

A blank of appropriate size is cut from a sheet of the desired material, and is then vacuum formed into the three-dimensional shape required to form a the surface of the decorative panel cover. An example of such a shape is shown in Figure 1 which shows a moulded substrate 1 for use in an instrument panel. The resulting three dimensional shape is referred to as a moulded cover in this description. In an alternative embodiment the moulded cover is produced by the process of slush moulding

Thus far the process described is conventionally used for the production of a decorative panel cover without a stitch line.

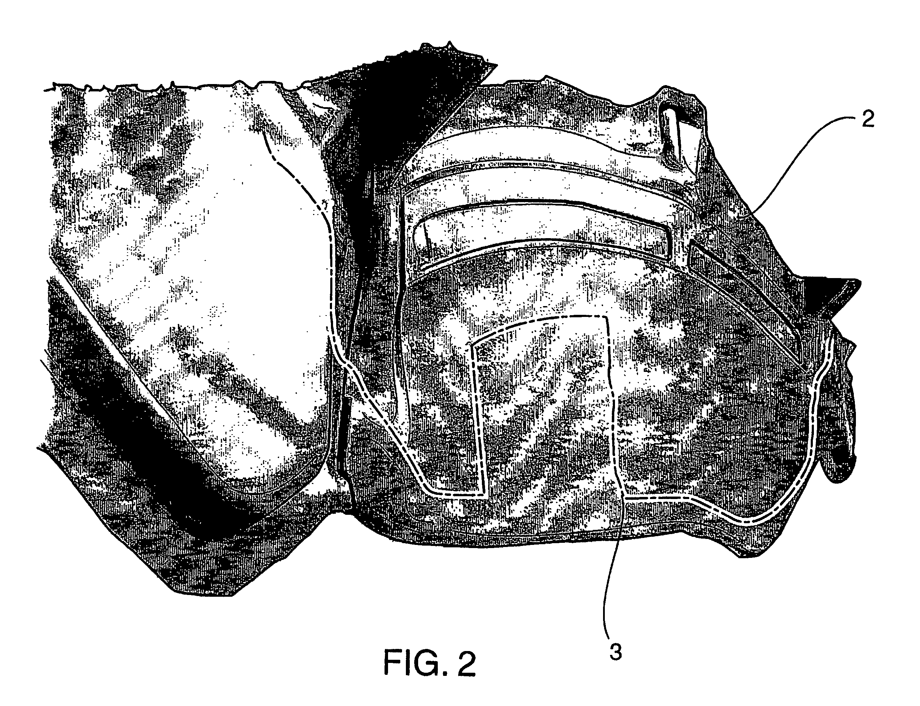

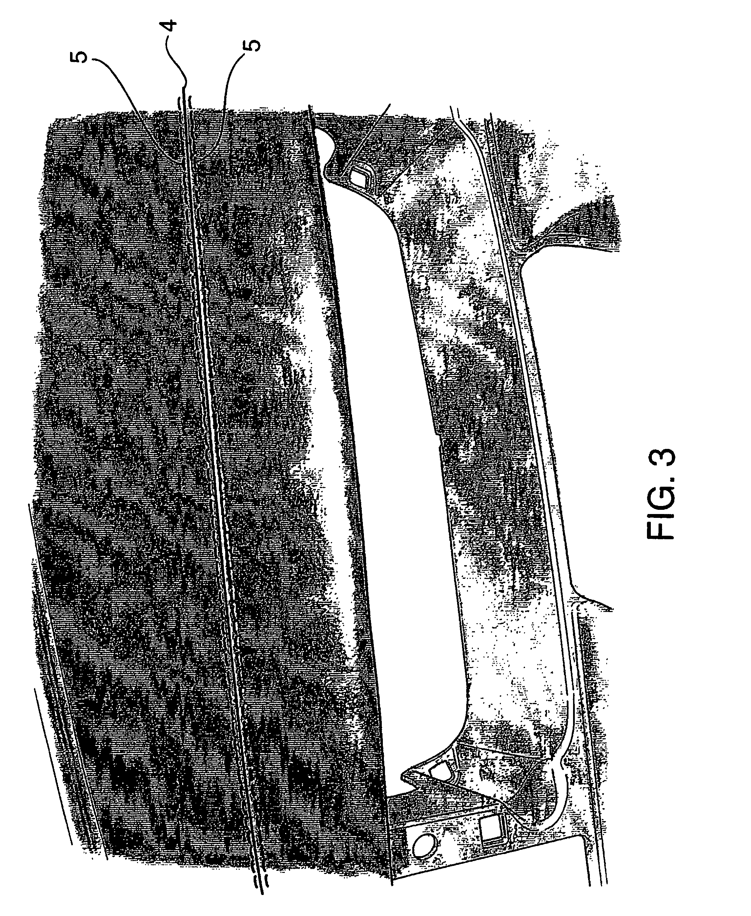

The next step is to cut the moulded cover into parts at a point which depends upon the required position of the stitch line. Figure 2 illustrates a moulded cover 2 which has the point at which the cut is to be formed marked at 3. In one embodiment of the invention the moulded cover parts resulting from cutting the moulded cover into two parts are stitched to each other to form a seam at the required position, and then the edges of the seam are turned back and top stitching is applied to each side of the seam. Figure 3 illustrates the appearance of a seam 4 which has had top stitching 5 applied at either side.

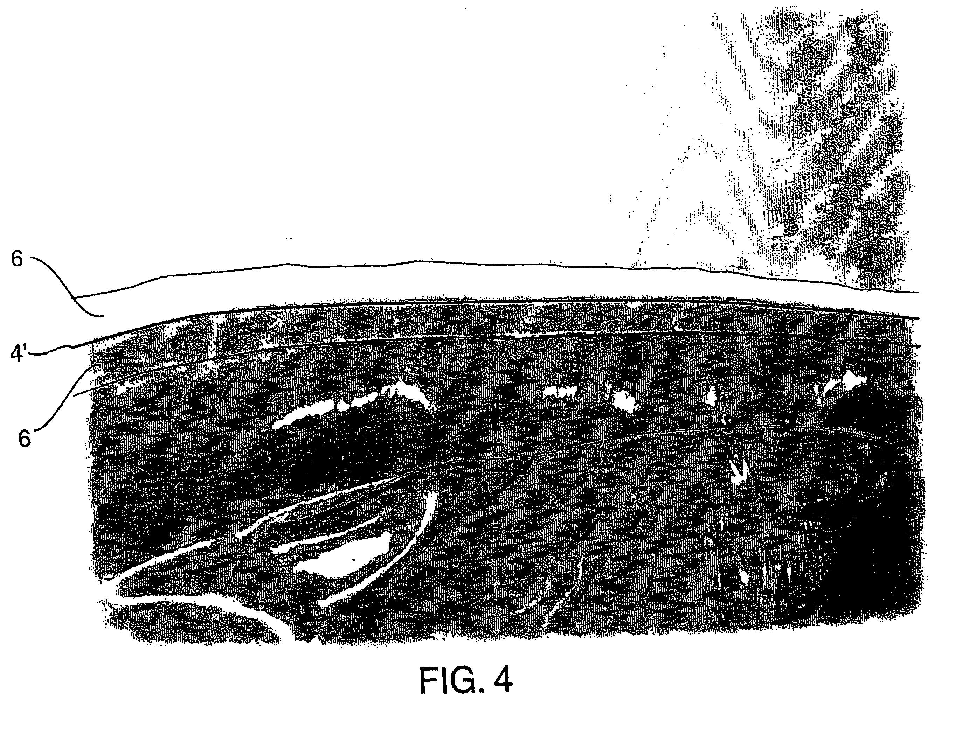

Figure 4 illustrates the reverse of a seam 4' where it can be seen that excess material 6 is folded away from the seam 4'. In an improved version the reverse of the seam is reinforced by bonding a strip of tape to the reverse of the seam. The tape may be applied either before or after topstitching has been performed.

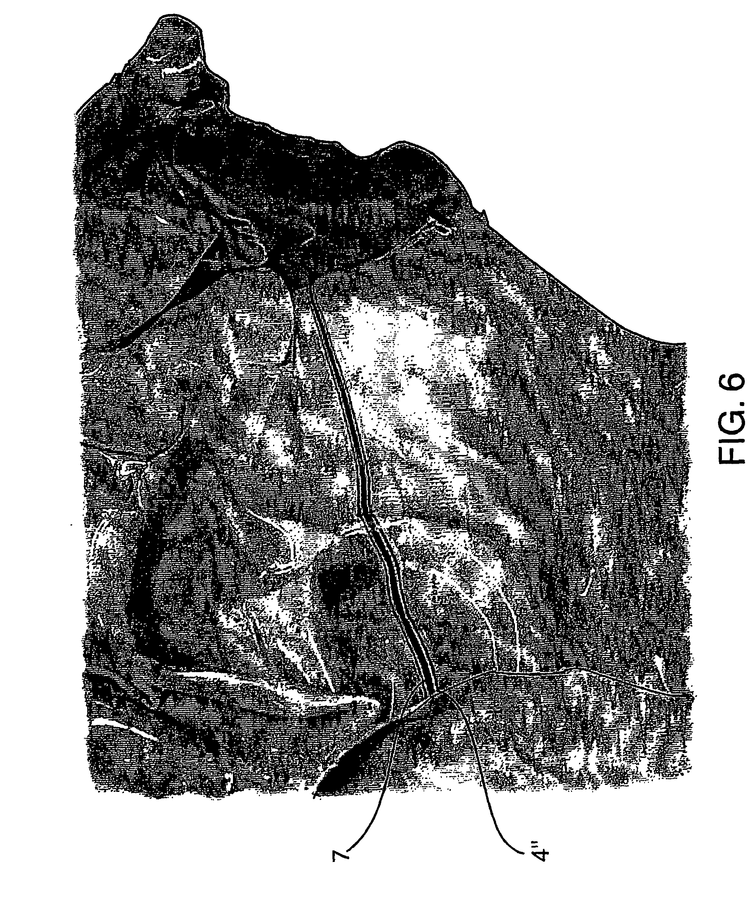

Figure 6 illustrates a seam 4'' which has had a strip of tape 7 bonded to the underside before the topstitching is applied such that the reinforcing tape is stitched to the cover. A disadvantage of this is that the stitch holes need to be sealed prior to bonding the cover to the moulded substrate.

In an improved version (not shown) the reinforcing tape is applied after topstitching, and serves to seal the stich holes created by the topstitching step.

It is an advantage if the same vacuum forming tools can be used for manufacturing panels with and without stitch lines. In the above described process the moulded cover, prior to cutting must be formed so that there is excess material available at the point where the stitch line is to be positioned, thus a different tool is required to produce panel covers which are to have stitch lines applied to that which is used to produce panel covers where no stitch line is required.

In an alternative embodiment of the method two identically shaped moulded covers are formed, and cut in slightly different places in each case. The cuts are made such that when one part of the first moulded cover is attached to a second part of the second moulded cover, a moulded cover with a seam is formed which is substantially identical in shape to the original moulded covers.

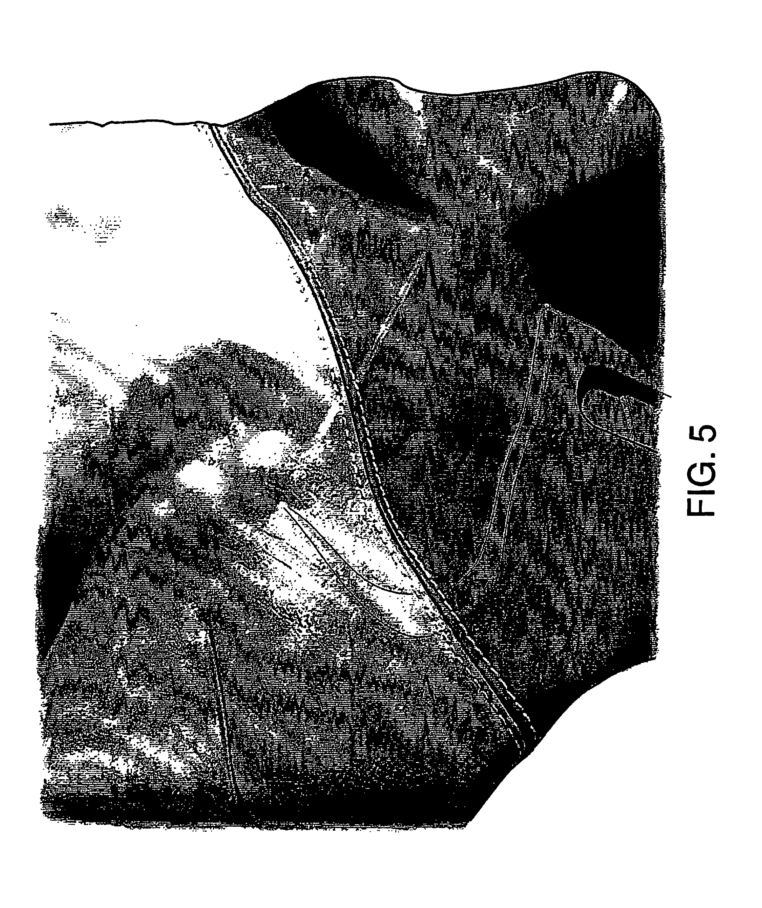

This embodiment also provides the advantage that twin colour moulded panels may be easily produced. An example of a twin colour moulded cover is shown in Figure 5. Furthermore the position of the stitch line can be modified for different models of automobiles or for models produced in different years without requiring any tooling changes.

The invention is not limited to manufacturing moulded parts which are made from moulded cover parts manufactured using a single tool. A different tool may be used for creating each of the first and second moulded cover parts, which are then attached together and a decorative top stitch applied to one or both sides of the resulting seam.

The moulded cover produced according to the invention is then used in a conventional process to manufacture a decorative panel. For example the moulded cover may be placed in a foaming tool along with a moulded substrate, such as that shown in Figure 1, to produce a finished decorative component.

## Claims

1. A method of manufacturing a decorative cover for a panel comprising the steps of
moulding a cover material to produce a first moulded cover part;
moulding a cover material to produce a second moulded cover part;
attaching the first moulded cover part to the second moulded cover part to form a seamed moulded cover having a seam;
top stitching the seamed moulded cover on at least one side of said seam.

2. A method according to claim 1, in which the first moulded cover part and the second moulded cover part are produced by separating a single moulded cover into two parts.

3. A method according to claim 1, in which the first moulded cover part is produced by separating a moulded cover into two parts and the second moulded cover part is produced by separating a second moulded cover into two parts.

4. A method according to claim 3, in which the shape and form of the first moulded cover and the shape and form of the second moulded cover is the same as the shape and form of the resulting seamed moulded cover.

5. A method according to any one of the preceding claims, in which the attaching step is performed by stitching the first part of the first moulded cover to the second part of the second moulded cover.

6. A method according to claim 5, further comprising the step of
sealing the seam by bonding a reinforcing strip along the inside of the seam.

7. A method according to any one of the preceding claims, in which the top stitching step comprises topstitching the seamed moulded cover on each side of said seam.

8. A decorative panel cover comprising
a first moulded cover part; and
a second moulded cover part;
in which
the first moulded cover part is attached to the second moulded cover part along a seam; and
at least one side of said seam is top stitched.

9. A panel according to claim 8, in which the first moulded part is attached to the second moulded part by stitching.

10. A panel according to claim 8 or claim 9, in which the seam is reinforced by a bonded reinforcing strip.

11. A panel according to any one of claims 8 to 10, in which both sides of the seam are top stitched.

## Patentansprüche

1. Ein Verfahren der Herstellung einer dekorativen Abdeckung für eine Blende, das die Schritte umfaßt:
ein Abdeckmaterial zu formen, um ein erstes in Form hergestelltes Abdeckteil herzustellen;
ein Abdeckmaterial zu formen, um ein zweites in Form hergestelltes Abdeckteil herzustellen;
das erste in Form hergestellte Abdeckteil an dem zweiten in Form hergestellten Abdeckteil zu befestigen, um eine mit Naht versehene, geformte Abdeckung zu bilden, die eine Naht aufweist; die mit Naht versehene, in Form hergestellte Abdeckung auf mindestens einer Seite dieser Naht zu übernähen.

2. Ein Verfahren gemäß Anspruch 1, in welchem das erste geformte Abdeckungsteil und das zweite geformte Abdeckungsteil hergestellt werden, indem man eine einzige geformte Abdeckung in zwei Teile trennt.

3. Ein Verfahren gemäß Anspruch 1, in welchem das erste geformte Abdeckungsteil hergestellt wird, indem man eine geformte Abdeckung in zwei Teile trennt; und das zweite geformte Abdeckungsteil hergestellt wird, indem man eine zweite geformte Abdeckung in zwei Teile trennt.

4. Ein Verfahren gemäß Anspruch 3, in welchem die Gestalt und Form der ersten geformten Abdeckung und die Gestalt und Form der zweiten geformten Abdeckung die gleiche ist wie die Gestalt und Form der resultierenden, mit Naht versehenen, geformten Abdeckung.

5. Ein Verfahren gemäß einem der vorstehenden Ansprüche, in welchem der Befestigungsschritt durch Annähen des ersten Teils der ersten geformten Abdeckung an dem zweiten Teil der zweiten geformten Abdeckung verrichtet wird.

6. Ein Verfahren gemäß Anspruch 5, das weiterhin den Schritt umfaß
die Naht abzudichten, indem man einen verstärkenden Streifen entlang der Innenseite der Naht aufklebt.

7. Ein Verfahren gemäß einem der vorstehenden Ansprüche, in welchem der Übernähschritt es umfaßt die mit Naht versehene, geformte Abdeckung auf jeder Seite dieses Saums zu übernähen.

8. Eine dekorative Blendenabdeckung, die umfaßt:
ein erstes geformtes Abdeckungsteil; und
ein zweites geformtes Abdeckungsteil;
in welcher
das erste geformte Abdeckungsteil entlang einer Naht an dem zweiten geformten Abdeckungsteil befestigt wird; und
mindestens eine Seite dieser Naht übernäht ist.

9. Eine Blende gemäß Anspruch 8, in welcher das erste geformte Teil an dem zweiten geformten Teil durch annähen befestigt ist.

10. Eine Blende gemäß Anspruch 8 oder Anspruch 9, in welcher die Naht durch einen angeklebten Verstärkungsstreifen verstärkt ist.

11. Eine Blende gemäß einem der Ansprüche 8 bis 10, in welcher beide Seiten der Naht übemäht sind.

## Revendications

1. Procédé de fabrication d'un revêtement décoratif pour un panneau comprenant les étapes consistant à :
mouler un matériau de revêtement pour produire une première partie de revêtement moulé ;
mouler un matériau de revêtement pour produire une seconde partie de revêtement moulé ;
fixer la première partie de revêtement moulé à la seconde partie de revêtement moulé pour former un revêtement moulé piqué présentant une piqûre ;
surpiquer le revêtement moulé piqué sur au moins un côté de ladite piqûre.

2. Procédé selon la revendication 1, dans lequel la première partie de revêtement moulé et la seconde partie de revêtement moulé sont produites en séparant en deux parties un seul revêtement moulé.

3. Procédé selon la revendication 1, dans lequel la première partie de revêtement moulé est produite en séparant un revêtement moulé en deux parties et la seconde partie de revêtement moulé est produite en séparant un second revêtement moulé en deux parties.

4. Procédé selon la revendication 3, dans lequel la coupe et la forme du premier revêtement moulé et la coupe et la forme du second revêtement moulé sont les mêmes que la coupe et la forme du revêtement moulé piqué résultant.

5. Procédé selon l'une quelconque des revendications précédentes, dans lequel l'étape de liaison est exécutée en piquant la première partie du premier revêtement moulé à la seconde partie du second revêtement moulé.

6. Procédé selon la revendication 5, comprenant en outre l'étape consistant à boucher la piqûre en liant une bande de renfort le long de l'intérieur de la piqûre.

7. Procédé selon l'une quelconque des revendications précédentes, dans lequel l'étape de surpiqûre comprend le surpiquage du revêtement moulé piqué de chaque côté de ladite piqûre.

8. Revêtement de panneau décoratif comprenant
une première partie de revêtement moulé ; et
une seconde partie de revêtement moulé ;
dans lesquelles
la première partie de revêtement moulé est fixée à la seconde partie de revêtement moulé le long d'une piqûre, et
au moins un côté de ladite piqûre est surpiqué.

9. Panneau selon la revendication 8, dans lequel la première partie moulée est reliée à la seconde partie moulée par piquage.

10. Panneau selon la revendication 8 ou la revendication 9, dans lequel la piqûre est renforcée par une bande de renfort liée.

11. Panneau selon l'une quelconque des revendications 8 à 10, dans lequel les deux côtés de la piqûre sont surpiqués.
